# EUROPEAN PATENT APPLICATION

(11) **EP 1 455 314 A2**
(43) Date of publication of application: **08.09.2004**
(21) Application number: 04003431.6
(22) Date of filing: 16.02.2004
(51) Int. Cl.: G07C 9/00

(54) **Vehicular remote control system**

(30) Priority: 03.03.2003 JP 2003055256
(71) Applicant: Omron Corporation, Kyoto-shi, Kyoto 600-8530 (JP)
(72) Inventor: Yamashita, Shuji, Omron Corporation, Shimogyo-ku Kyotoshi Kyoto 600-8530 (JP); Fujii, Masaki, Omron Corporation, Shimogyo-ku Kyotoshi Kyoto 600-8530 (JP)
(74) Representative: Kilian, Helmut, Dr.

(57) **Abstract**

To acquire a more satisfactory operation feel by making a time lag as short as possible from the instant when push button switches on the side of a vehicle are pushed to the instant when a door is actually locked/unlocked or when a trunk is actually opened. A vehicular remote control system includes a mobile unit carried by a driver and a vehicle unit mounted on a vehicle. The mobile unit sequentially receives signals transmitted from an n-number of transmission antennas of the vehicle unit to measure the reception intensities of the individual response signals, and then transmits those n-number of pieces of reception intensity information all at once to the vehicle unit. The vehicle unit locates the mobile unit on the basis of the n-number of pieces of reception intensity information. If the time period necessary for each reception intensity measurement is designated by Ta and if the time period necessary for the notification of the measurement result is designated by Tb, the time lag can be reduced by the difference between {n x (Ta + Tb)) and (n x Ta + Tb).

## Description

### BACKGROUND OF THE INVENTION

### Field of the Invention

The present invention relates to a vehicular remote control system, particularly to a vehicular remote control system which is a convenient system enabling operations such as locking/unlocking of a door and opening of a trunk (furthermore, engine starting and the like) without using any mechanical key and more particularly to a vehicular remote control system which includes a "mobile unit" to be carried by a driver and a "vehicle unit" on a vehicle side for wireless communications using electric waves as media with the mobile unit.

### Description of the Related Art

As the vehicular remote control system of this kind, there have been known in the related art a basic type "keyless entry system" and an development type "smart entry system (or a passive entry system or a handsfree entry system)".

These systems are made so common as to contain the "mobile unit" to be carried by a driver and the "vehicle unit" on the vehicle side for wireless communications using electric waves as media with the mobile unit, but are different in the point of communication mode, that is, in that the former basic type performs unidirectional communications from the mobile unit to the vehicle unit whereas the latter development type performs bidirectional communications between the mobile unit and the vehicle unit.

Due to this difference in the (unidirectional or bidirectional) communication mode, the development type can have higher use than that of the basic type. Specifically, the representative functions to be realized by those vehicular remote control systems are: (1) to lock a door, to unlock a door or to open a trunk merely by operating the buttons of the mobile unit; and (2) to lock the door, to unlock the door or to open the trunk merely by pushing the push button switch (e. g. , the push button switch disposed at a door knob) on the vehicle side with the mobile unit being worn. The basic type can realize only the function (1), but the development type can realize both the functions (1) and (2).

Here, the functions to be realized by the vehicular remote control system are not limited to those (1) and (2). For example, a function such as an engine start may be included, but the following description will be limited to the aforementioned functions (1) and (2) for simplicity.

Moreover, the aforementioned function (2) can also be achieved without pushing the push button switch on the vehicle side. This can be exemplified by the case, in which a non-contact switch such as a radio sensor is disposed on the vehicle side. In this case, the non-contact switch on the vehicle side responds to the mobile unit when the driver approaches the vehicle while wearing the mobile unit, so that the function to lock the door, to unlock the door or to open the trunk can be performed.

Moreover, the control object should not be limited to the "door locking", "door unlocking" and the "trunk opening". These functions are only representatives and can be exemplified by making a warning with a horn, a buzzer vibration or an electronic sound.

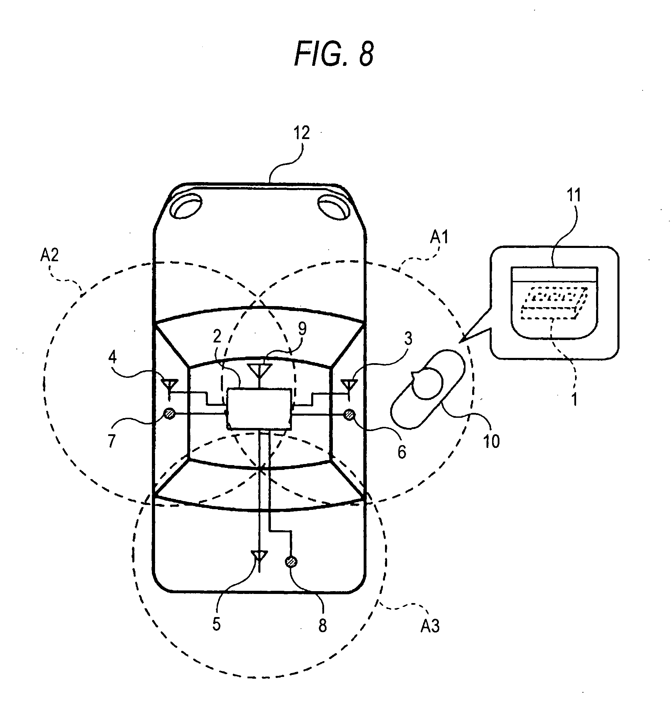

Fig. 8 is a conceptional diagram of the "developed type" vehicular remote control system (as referred to JP-A-2002-77972, for example). In the following, the mere "vehicular remote control system" will indicate the development type. In Fig. 8, the vehicular remote control system includes a mobile unit 1 and a vehicle unit 2. To this vehicle unit 2, there are connected: a plurality of transmission antennas (i.e., three: a right transmission antenna 3 arranged near the right door; a left transmission antenna 4 arranged near the left door; and a back transmission antenna 5 disposed near the trunk, as shown ) ; push button switches (i.e., three: a right push button switch 6; a left push button switch 7; and a back push button switch 8, as shown); and one reception antenna 9.

Here, non-contact switches (which have contacts turned ON when the mobile unit 1 approaches) having actions equivalent to those of the push button switches (i. e. , the three push button switches of the right push button switch 6, the left push button switch 7 and the back push button switch 8, as shown) may be provided but are omitted from Fig. 8. In order to avoid the congestion of the description, the presence of the non-contact switches will be ignored in the following.

Now, a driver 10 approaches a vehicle 12 and pushes an arbitrary push button switch (e. g. , the right push button switch 6 for convenience, as shown) while carrying the mobile unit 1 (e.g., with the mobile unit 1 being put in a pocket 11). Then, questions are responded between the vehicle unit 2 and the mobile unit 1. The questions are signals (as will be called "down signal") to be transmitted through the transmission antennas 3 to 5 from the vehicle unit 2 to the mobile unit 1. The down-signal includes a control signal for starting (or waking up) the mobile unit 1. In response to the control signal, the mobile unit 1 advances from a low power mode to an action mode. After this, the mobile unit 1 creates a response signal containing the ID (i.e., the identification information inherent to the mobile unit 1), which is assigned in advance to the mobile unit 1, and transmits the response signal, while carrying it on the signal (as will be called the "up-signal") from the mobile unit 1 to the vehicle unit 2, to the vehicle unit 2.

The vehicle unit 2 receives the up-signal at the reception antenna 9 and collates the ID contained in the signal and a collation ID held in advance. If these IDs are identical, the vehicle unit 2 specifies the location of the mobile unit 1 and creates a right door unlocking signal (if the right door is locked), or a right door locking signal (if the right door is unlocked) , in case the mobile unit 1 is located near the right door outside of the vehicle, as shown.

The vehicular remote control system thus constructed can lock/unlock the door by pushing the right push button switch 6 or the left push button switch 7 and can open the trunk by pushing the back push button switch 8 with the mobile unit 1 being worn. Unlike the basic type, therefore, the vehicular remote control system need not put the mobile unit out of the pocket so that it enjoys a remarkable using convenience. In case the non-contact switch is disposed on the vehicle side, on the other hand, even the operation of the push button switch is not required, but the door can be locked/unlocked and the trunk can be opened in a handsfree manner.

However, the vehicular remote control system of the related art has a disadvantage that a more or less time lag is established between either the pushing operation of the vehicle side push button switch (as referred to the right push button switch 6, the left push button switch 7 and the back push button switch 8 of Fig. 8) or the response of the non-contact switch, if any, and the actual door locking/unlocking or the trunk opening. Therefore, the vehicular remote control system still has room for improvement in a better operation feel.

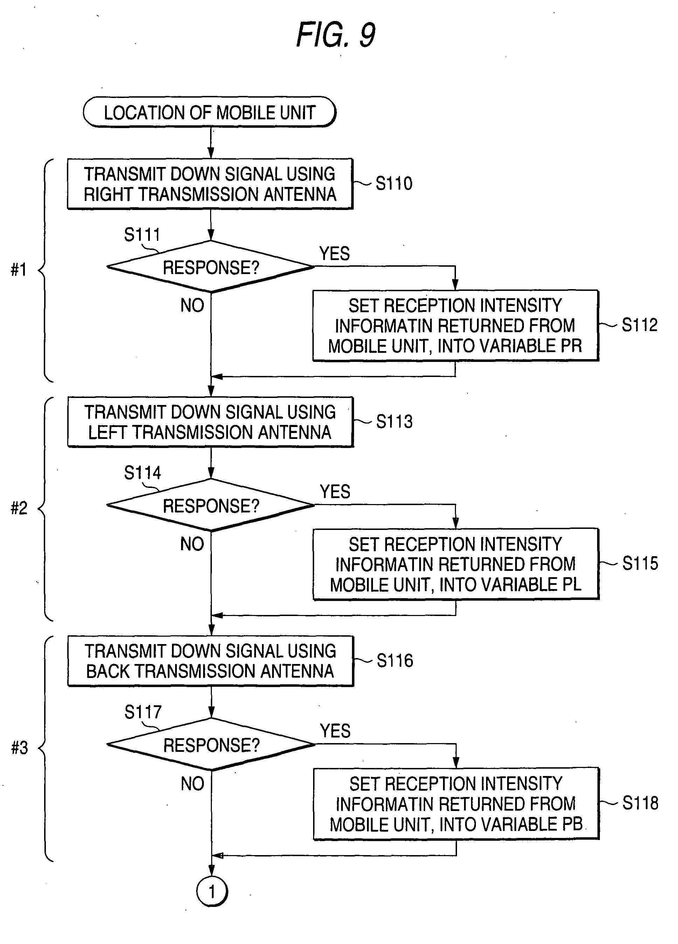

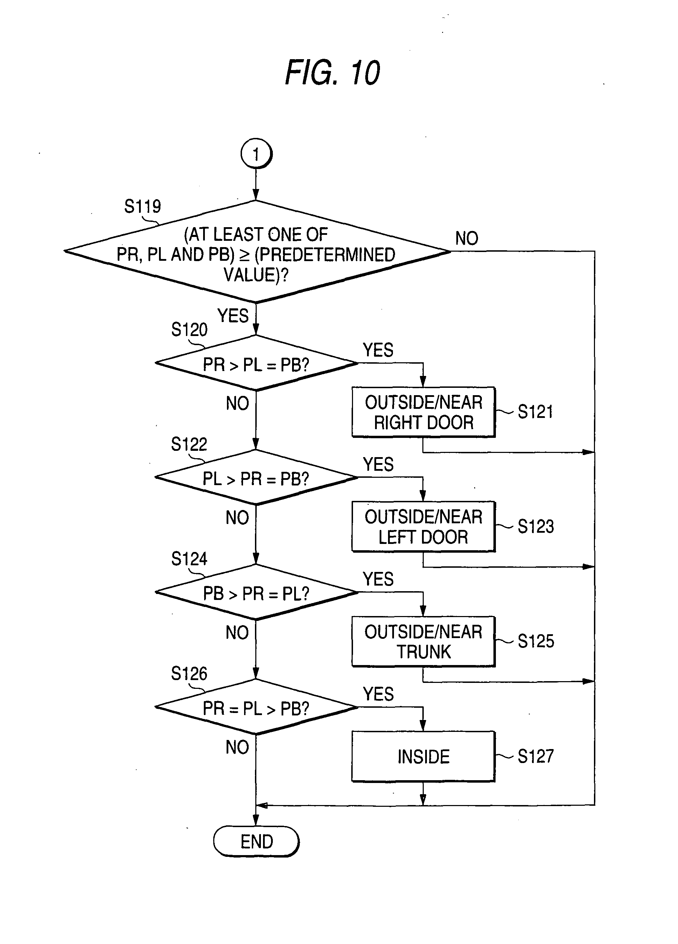

This disadvantage will be described in the following. Figs. 9 and 10 are conceptional flow chart diagrams of the "Mobile Unit location" in the vehicular remote control system of the related art. These flow charts are executed in the vehicle unit 2.

At first, when the mobile unit 1 receives the question (or the down-signal) from the vehicle unit 2, it can measure the reception intensity (e.g., the signal level) of the down-signal and can transmit the reception intensity information while being contained in the response (or the up-signal) to the vehicle unit 2.

When the flow chart is started, the down-signal is transmitted at first by using a first antenna (i.e. , the right transmission antenna 3) (at Step S110). The mobile unit 1 measures the reception intensity (as will be called the "right reception intensity" because the down-signal is transmitted from the right transmission antenna 3) of the down-signal, and transmits the measurement result (i.e., the right reception intensity information) while being contained in the response (i.e. , the up-signal) to the vehicle unit 2. When the vehicle unit 2 receives the up-signal from the mobile unit 1 (at Step S111), it sets the right reception intensity information with a predetermined variable PR (at Step S112).

Next, a second antenna (i.e., the left transmission antenna 4) is used to transmit the down-signal (at Step S113). Likewise, the mobile unit 1 measures the reception intensity (as will be called the "left reception intensity" because the down-signal is transmitted from the left transmission antenna 4) of the down-signal, and transmits the measurement result (i.e., the left reception intensity information) while being contained in the response (i.e. , the up-signal) to the vehicle unit 2. When the vehicle unit 2 receives the up-signal from the mobile unit 1 (at Step S114), it sets the left reception intensity information with a predetermined variable PL (at Step S115).

Next, a third antenna (i. e. , the back transmission antenna 5) is used to transmit the down-signal (at Step S116). Likewise, the mobile unit 1 measures the reception intensity (as will be called the "back reception intensity" because the down-signal is transmitted from the back transmission antenna 5) of the down-signal, and transmits the measurement result (i.e., the back reception intensity information) while being contained in the response (i.e., the up-signal) to the vehicle unit 2. When the vehicle unit 2 receives the up-signal from the mobile unit 1 (at Step S117), it sets the back reception intensity information with a predetermined variable PB (at Step S118).

Thus, every pieces of reception intensity information (i.e., the right reception intensity information / the left reception intensity information / the back reception intensity information) , as measured by the mobile unit 1, of the individual transmission antennas 3 to 5 are set with the variables PR, PL and PB, respectively. Next, the routine (e.g. , Steps S119 to Step S127 of Fig. 10) to locate the mobile unit 1 is executed.

Here, in Fig. 8: characters A1 designate the horizontal radiation pattern of the right transmission antenna 3; characters A2 designate the horizontal radiation pattern of the left transmission antenna 4; and characters A3 designate the horizontal radiation pattern of the back transmission antenna 5. Generally, the electric waves have the nature to become the weaker (precisely, inversely proportional to the biquadrate to the distance) , as the distance becomes the longer. When the driver 10 wearing the mobile unit 1 is at the shown position (within the pattern A1: outside of the vehicle / near the right door), for example, the down-signal from the right transmission antenna 3 at the place the closest to the mobile unit 1 has the maximum reception intensity (i.e., the right reception intensity).

When the driver 10 wearing the mobile unit 1 is within the pattern A2 (outside of the vehicle / near the left door), the down-signal from the left transmission antenna 4 at the place the closest to the mobile unit 1 likewise has the maximum reception intensity (i.e., the left reception intensity) . When the driver 10 wearing the mobile unit 1 is within the pattern A3 (outside of the vehicle / near the trunk) , on the other hand, the down-signal from the back transmission antenna 5 at the place the closest to the mobile unit 1 has the maximum reception intensity (i.e., the back reception intensity). When the driver 10 wearing the mobile unit 1 is within the overlap area (i.e., inside of the vehicle) between the pattern A1 and A2, both the reception intensities (i.e., the back reception intensity) of the down-signals from the two antennas (i.e., the right transmission antenna 3 and the left transmission antenna 4) at the place the closest to the mobile unit 1 are the maximum.

In the routine (i.e. , the Step S110 to Step S118) of Fig. 9, therefore: the right reception intensity has been set with the variable PR; the left reception intensity has been set with the variable PL; and the back reception intensity has been set with the variable PB so that the mobile unit 1 can be located on the basis of the magnitude relations between those variables PR, PL and PB.

Specifically, for example, it is possible to decide (at Step S121) that the mobile unit 1 is located near the right door outside of the vehicle, if at least one of the variables PR, PL and PB is at or higher than a predetermined value (at Step S119) and if a condition 1 (PR > PL = PB) is satisfied (at Step S120). Alternatively, it is possible to decide (at Step S123) that the mobile unit 1 is located near the left door outside of the vehicle, if a condition 2 (PL > PR = PB) is satisfied (at Step S122) . Alternatively, it is possible to decide (at Step S125) that the mobile unit 1 is located near the trunk outside of the door, if a condition 3 (PB > PR = PL) is satisfied (at Step S124). Alternatively, it is possible to decide (at Step S127) that the mobile unit 1 is located in the vehicle, if a condition (PR = PL > PB) is satisfied (at Step S126).

In this mobile unit location routine, however, the questions and responses are repeated by the number n of the transmission antennas, as shown at #1 to #3 in Fig. 9. If the time period from the instant when the response of the mobile unit 1 to a question is received after the question to the instant when the pieces of reception intensity contained in the responses are set with the individual variables is designated by T, it takes the time period of "n x T" (corresponding to the aforementioned time lag) to complete at least the operations #1 to #3. Moreover, it is predicted that the number n of the transmission antennas will increase in the future. For example, the one-box car may be provided with totally five transmission antennas at most for the right and left doors of the front seat and the back seat and for the back door. In this case, the time period required is as long as "5 x T" so that the time lag increases more and more. This is a technical problem to be solved in the point to achieve a better operation feel without any physical disorder.

### SUMMARY OF THE INVENTION

Therefore, an object of the present invention is to provide a vehicular remote control system, which can acquire a more satisfactory operation feel by making a time lag as short as possible from the instant either when push button switches (as referred to the right push button switch 6, the left push button switch 7 and the back push button switch 8 of Fig. 8) on the side of a vehicle are pushed or when the non-contact switch on the vehicle side is induced, to the instant when a door is actually locked/unlocked or when a trunk is actually opened.

According to a first aspect of the invention, there is provided a vehicular remote control system comprising: a mobile unit carried by a driver and having a plurality of transmission antennas; and a vehicle unit mounted on a vehicle, wherein the mobile unit sequentially receives signals transmitted from at least one of the transmission antennas to measure the reception intensities of the individual response signals, and then transmits the information on those reception intensities all at once to the mobile unit, and wherein the vehicle unit locates the mobile unit on the basis of the reception intensity information transmitted from the mobile unit, and executes an arbitrary processing action according to the location of the mobile unit.

In this invention, the mobile unit sequentially receives signals transmitted from at least one of the transmission antennas to measure the reception intensities of the individual response signals, and then transmits the information on those reception intensities all at once to the vehicle unit. In short, in contrast to the related art, the invention contains the new matter of "the mobile unit sequentially receives signals transmitted from at least one of the transmission antennas to measure the reception intensities of the individual response signals, and then transmits the information on those reception intensities all at once to the vehicle unit ".

Specifically, in the related art, the measurements of the reception intensities and the transmissions of the measurement results to the vehicle unit are performed in pairs for every signals transmitted from the n-number of transmission antennas of the vehicle unit. Therefore, for example, if the time period necessary for each reception intensity measurement is designated by Ta and if the time period necessary for the notification of the measurement result (to the vehicle unit) is designated by Tb, the time period of {n x (Ta + Tb)} is caused in the related art by the simple calculation, and this time period leads to the problem of the time lag. However, the invention contains the above-specified new matter so that it takes the time period of (n x Ta + Tb) at the longest by the simple calculation, although the worst case (in which the signals transmitted from all the n-number of transmission antennas of the vehicle unit are sequentially received) is imagined.

In the invention, therefore, in contrast to the related art, the time lag can be reduced by the difference between {n x (Ta + Tb)} and {n x Ta + Tb} . As a result, it is possible to provide the vehicular remote control system, which can achieve a better operation feel without any physical disorder.

Here in the vehicular remote control system of the first aspect of the invention, the location of the mobile unit is performed by the vehicle unit. The remote control system should not be limited to that mode but may be modified such that the mobile unit locates itself.

Specifically, according to a second aspect of the invention, on the other hand, the vehicular remote control system may comprise: a mobile unit carried by a driver and having a plurality of transmission antennas; and a vehicle unit mounted on a vehicle. The mobile unit sequentially receives signals transmitted from at least one of the transmission antennas to measure the reception intensities of the individual response signals, then locates the mobile unit on the basis of pieces of information of the reception intensities, and transmits the location result to the vehicle unit. The vehicle unit executes an arbitrary processing action according to the location result transmitted from the mobile unit.

In this invention, as in the vehicular remote control system of the first aspect of the invention, it is also possible to provide the vehicular remote control system, which can achieve reduction of time lag and a better operation feel without any physical disorder.

In the vehicular remote control system of the first and second aspects of the invention, according to the vehicular remote control system of a third aspect of the invention, the arbitrary processing action may be an operation relating at least to a locking of a door, an unlocking of a door and an opening of a trunk, and performs: the locking/unlocking of an arbitrary door in case the mobile unit is located near the arbitrary door; the opening of a trunk in case the same is located near the trunk, or the warning with a horn, a buzzer vibration, an electric sound or another sound.

In accordance with the present position of the mobile unit, it is possible to selectively perform the various operations such as the locking of the door, the unlocking of the door, the opening of the trunk, and the warning with the horn, the buzzer vibration, the electric sound or another sound.

In the vehicular remote control system of the first and second aspects of the invention, according to the vehicular remote control system of a fourth aspect of the invention, of the signals transmitted from all or not less than one of the transmission antennas, the signals other than that transmitted at first are exclusively dummy signals aiming mainly at measurements of the reception intensities at the mobile unit.

The signal period of the dummy signal can be shortened to the minimum elongation, which aims mainly at the measurement of the reception intensity in the mobile unit, so that the time period Ta necessary for each reception intensity measurement can be made the shorter to reduce the time lag the more.

### BRIEF DESCRIPTION OF THE DRAWINGS

Fig. 1 is a conceptional system block diagram of a vehicular remote control system 20 according to an embodiment;
Fig. 2 is a diagram showing a conceptional action flow chart of the vehicular remote control system 20 according to the embodiment;
Fig. 3 is a diagram showing a subroutine flow of the "Location of Mobile Unit" common among Step S16, Step S24 and Step S34 in the flow chart of Fig. 2;
Fig. 4 is a diagram showing a flow chart of the mobile unit responding actions to be executed in a mobile unit 50 in response to the location of the mobile unit;
Fig. 5 is a diagram showing a format of a response signal;
Fig.. 6 is a diagram showing a conceptional time run of the location in the embodiment;
Fig. 7 is a diagram showing a modification of the embodiment of the invention;
Fig. 8 is a conceptional diagram of a (developed type) vehicular remote control system of the related art;
Fig. 9 is a conceptional flow chart diagram (1) of the "Mobile Unit location" in the vehicular remote control system of the related art; and
Fig. 10 is a conceptional flow chart diagram (2) of the "Mobile Unit location" in the vehicular remote control system of the related art.

### DESCRIPTION OF THE PREFERRED EMBODIMENT

An embodiment of the invention will be described with reference to the accompanying drawings. Here, it is apparent that the specifications and examples of the various details and the exemplifications of the numerical values, characters and other symbols in the following description are merely references for clarifying the concept of the invention so that their all or portions should not limit the concept of the invention. Moreover, any detailed description is eliminated from the well-known method, the well-known procedure, the well-known architecture and the well-known circuit construction (as will be called the "well-known item"), and this elimination is made just for simplifying the description but not for excluding all or portions of those well-known items intentionally. These well-known items can be known to those skilled in the art at the application time of the invention so that they are naturally contained in the following description.

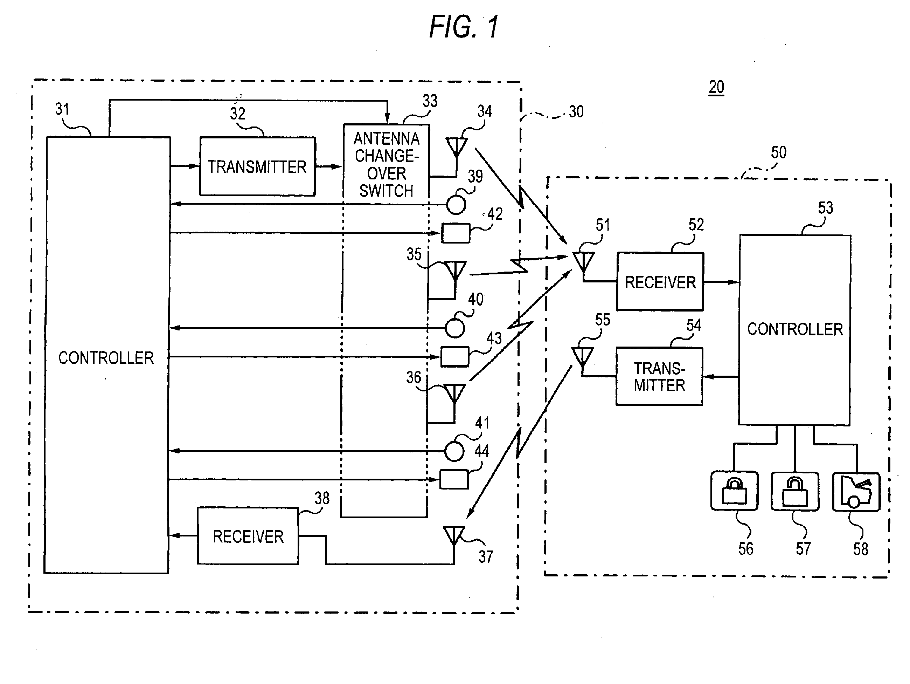

Fig. 1 is a conceptional system block diagram of a vehicular remote control system 20 according to an embodiment. This vehicular remote control system 20 is constructed to include one vehicle unit 30 and one or more mobile units 50. Here, the shown vehicular remote control system 20 corresponds to the "development type" , which has been described at the beginning. Specifically, at least, (1) the door locking, the door unlocking and the trunk opening can be performed merely by the button operations of the mobile unit 50, and (2) the door locking, the door unlocking and the trunk opening can be performed merely by operating the push button switches on the vehicle side with the mobile unit 50 being worn by the operator.

Moreover, the functions to be realized by the vehicular remote control system 20 are not limited to those ((1) and ( 2 )). For example, they may include the function of the engine start, but the following description will be restricted to the aforementioned functions (1) and (2) so as to simplify the description.

Moreover, some of the aforementioned functions (2) can be achieved without pushing the push button switch on the vehicle side. This is exemplified by the case, in which a non-contact switch such as a radio sensor is disposed on the vehicle side. In this case, when the operator merely approaches the vehicle while wearing the mobile unit 50, the non-contact switch on the vehicle can response to the approach to perform the door locking, the door unlocking and trunk opening operations.

Moreover, the control objects are not limited to the "door locking", the "door unlocking" and the "trunk opening". These operations are just representatives and may further include a warning with a horn sound, a buzzer vibration or an electronic sound.

The vehicle unit 30 includes: a controller 31 for controlling the entire actions of the vehicle unit 30; a transmitter 32 for converting a down-signal created by the controller 31, into a signal of a predetermined frequency; an antenna change-over switch 33 for changing transmission antennas 34 to 36 of an n-number (here, n = 3) (as will be named by the right transmission antenna 34, the left transmission antenna 35 and the back transmission antenna 36 in the consecutively downward order) in a time sharing manner in accordance with a command signal from the controller 31; a receiver 38 for demodulating an up-signal of a predetermined frequency received by a single reception antenna 37, into a base band signal; push button switches 39 to 41 of the n-number (as will be named by the right push button switch 39, the left push button switch 40 and the back push button switch 41 in the consecutively downward order) provided for the transmission antennas 34 to 36, respectively; and actuators 42 to 44 of the n-number (as will be named by the right door locking/unlocking actuator 42, the left door locking/unlocking actuator 43 and the trunk opening actuator 44 in the consecutively downward order) also provided for the transmission antennas 34 to 36, respectively.

Here, non-contact switches (which have contacts turned On when the mobile unit 50 come close thereto) having actions equivalent to those of the push button switches 39 to 41 (i.e. , the right push button switch 39, the left push button switch 40 and the back push button switch 41) may be provided but are omitted from Fig. 1. In order to avoid the congestion of the description, the presence of the non-contact switches will be ignored in the following.

On the other hand, the mobile unit 50 includes: a receiver 52 for demodulating a down-signal of a predetermined frequency received by a receiving antenna 51, into a base band signal; a controller 53 for controlling the entire actions of the mobile unit 50; a transmitter 54 for converting an up-signal created by the controller 53, into a signal of a predetermined frequency and outputting the converted signal from a transmission antenna 55; and several remote control buttons (as will be named by a locking button 56, an unlocking button 57 and a trunk opening button 58 in the consecutively rightward order ) . There is also a mobile unit 50, which is not provided with those remote control buttons. This corresponds to the case of the mobile unit 50 to be used while being paired with the non-contact switches disposed on the vehicle side.

The mobile unit 50 usually acts in a low power mode and shifts from the low power mode to an ordinary action mode in the case (A or B), in which any of the locking button 56, the unlocking button 57 and the trunk opening button 58 is pushed (as will be called the "A-mode") or in which a predetermined control signal (for waking up) is contained in the down-signal received from the vehicle unit 30 (as will be called the "B-mode" ) . Moreover, the mobile unit 50 creates the up-signal containing the ID of the mobile unit 50 and a remote control signal (e.g., a locking signal, an unlocking signal or a trunk opening signal) and transmits the up-signal to the vehicle unit 30, in case the shift event is caused in the A-mode. In case the shift event is caused in the B-mode, on the other hand, the up-signal containing the ID of the mobile unit 50 is created and transmitted to the vehicle unit 30.

Regularly or when the right push button switch 39, the left push button switch 40 or the back push button switch 41 is pushed, the vehicle unit 30 creates the down-signal including the waking-up control signal, and transmits it to the mobile unit 50.

When the vehicle unit 30 receives either the up-signal transmitted irregularly (when the locking button 56, the unlocking button 57 or the trunk opening button 58 is pushed) from the mobile unit 50 or the up-signal returned in response to the aforementioned down-signal, the vehicle unit 30 collates that ID of the mobile unit 50 which is contained in the up-signal. In case it is decided that the up-signal has come from the proper mobile unit 50, the vehicle unit 30 executes the processing necessary for realizing the aforementioned functions (1) and (2).

Specifically, in case (corresponding to the aforementioned function (1)) the remote control signal (i.e. , the locking signal, the unlocking signal or the trunk opening signal) is contained in the up-signal, the actuator (i.e., the right door locking/unlocking actuator 42, the left door locking/unlocking actuator 43 or the trunk opening actuator 44) corresponding to that signal is run to lock/unlock the right or left door or to open the trunk. In case (corresponding to the aforementioned function (2)) the right push button switch 39, the left push button switch 40 or the back push button switch 41 on the vehicle side is pushed, on the other hand, the mobile unit 50 is then located (e.g., at the outside / near the right door, at the outside / near the left door, at the outside /near the trunk, or the inside). In accordance with this decision result, the corresponding actuator (i.e., the right door locking/unlocking actuator 42, the left door locking/unlocking actuator 43 or the trunk opening actuator 44) is run to lock or unlock the right or left door or to open the trunk. In addition to the door locking or unlocking or trunk opening control, for example, there may be made the engine start/stop control. This engine start/stop control will be mentioned in the following description.

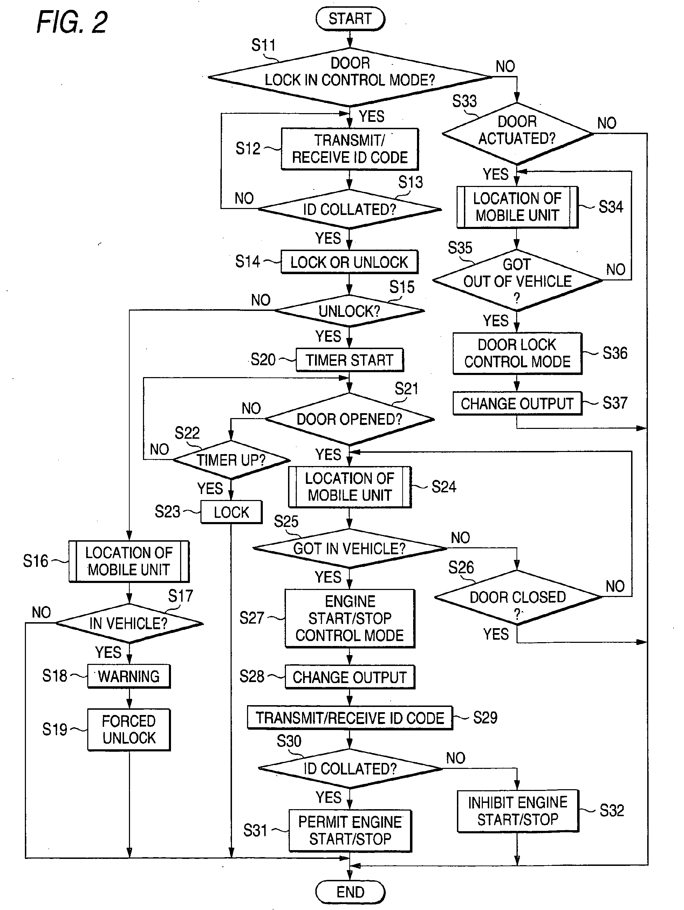

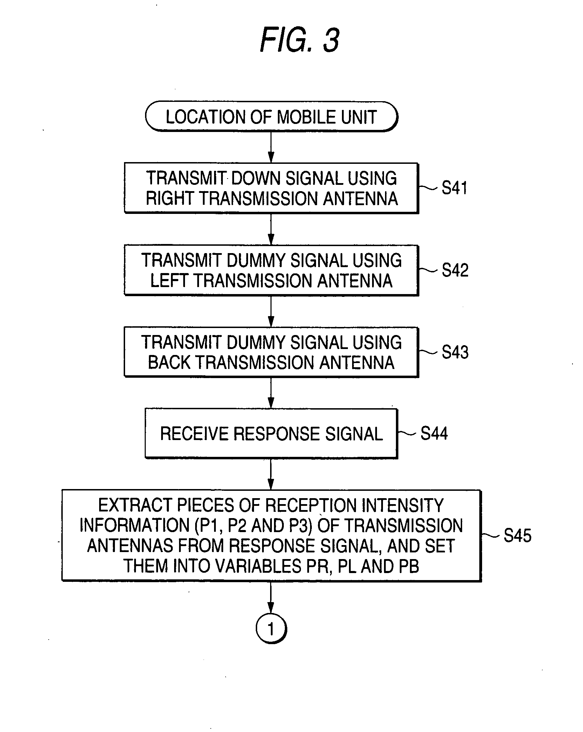

Fig. 2 is a diagram showing a conceptional action flow chart of the vehicular remote control system 20 according to the embodiment. Here, the following description is intended to present just "one example" of the actions of the vehicular remote control system 20 at best, and the extension of the technical concept of the invention should not be grasped according to that action example. What is important is that the actions contain the "Mobile Unit Location" (at Step S16, Step S24 and Step S34, the contents of specific processing of which are shorn in Fig. 3), which contains such important items as are indispensable for the invention.

In this flow chart, it is decided (at Step S11 ) at first whether or not the control mode of the vehicle unit 30 is in the door lock control mode. Here, the vehicle unit 30 is in the door lock control mode in its initial state. The door lock control mode is that of the case, in which the locking/unlocking control of the door is to be executed. In this door lock control mode, the transmission output of the vehicle unit 30 has a large value preferable for an entry system.

In this door lock control mode, moreover, when the down-signal including the waking-up control signal is transmitted from the vehicle unit 30, the mobile unit 50 exists within the aforementioned remote controlling communicative range so that it receives the down-signal including that waking-up control signal. Then, the mobile unit 50 is changed from the low power mode into the ordinal action mode so that it transmits (at Step S12) the up-signal containing the ID. Alternatively, when the locking button 56, the unlocking button 5 7 or the trunk opening button 58 of the mobile unit 50 is operated, the mobile unit 50 transmits (at Step S12) the up-signal including the locking signal, the unlocking signal or the trunk opening signal together with the aforementioned ID. In any of these cases, the mobile unit 50 automatically returns from the ordinary action mode to the low power mode at the instant when a predetermined timer time elapses after the mobile unit 50 transmitted the aforementioned up-signal.

The up-signal transmitted from the mobile unit 50 is naturally received by the vehicle unit 30 if it is transmitted from the communicative range and without any fault such as an abnormal drop of the transmission output of the mobile unit 50. The vehicle unit 30 decides (at Step S13) it by collating the ID contained in the received up-signal and a collation ID registered in advance in the vehicle unit 30, whether or not the IDs are identical.

If the IDs are identical, the locking/unlocking controls of the doors or trunk of the vehicle are executed by the control of the controller 31 in accordance with the situations. Specifically, either in case the reception intensity information contained in the received up-signal is at larger than a preset value or more and in case the door is in the locked state (that is, in case it is estimated that the user is approaching the locked door of the vehicle), or in case the received signal is an unlock command signal, a control signal to command the unlocking action is outputted (at Step S14) to the door lock actuator (i.e. , the right door locking/unlocking actuator 42 or the left door locking/unlocking actuator 43). On the other hand, for example, either in case the reception intensity information of the received up-signal is smaller than the preset value (or in case the state capable of receiving the up-signal changes into the incapable state) and in case the door is in the unlocked state (or in case it is estimated that the user has leaves the unlocked door of the vehicle), or in case the received signal is the lock command signal, a control signal to command the locking action is outputted (at Step S14) to the door lock actuator (i.e., the right door locking/unlocking actuator 42 or the left door locking/unlocking actuator 43).

Next, in case the locking/unlocking control executed by the control of the controller 31 is the locking action (to output the control signal to command the locking action) (that the decision of Step S15 is "NO"), the location of the mobile unit is executed (at Step S16) to make sure of it. If the mobile unit 50 is in the vehicle (at Step S17), the warning (to be caused by activating the horn or by turning ON the light, for example) is outputted (at Step S18), or the unlocking action is forcedly executed (at Step S19) to make countermeasures against the action of leaving (i.e., the so-called "lock-in") the mobile unit 50 in the vehicle, and then a series of operations are ended.

In case the locking/unlocking control executed by the control of the controller 31 is the unlocking action (i.e., to output the control signal to command the unlocking action) (that is, in case the decision of Step S15 is "YES"), on the other hand, the controller 31 of the vehicle unit 30 starts a preset timing action of a timer (at Step S20). Here, this set time of the timer may be about several tens seconds to several minutes.

After this, the controller 31 decides (at Step S21) reads the output of the door open/close sensor (although not shown) to decide whether or not the door has been opened. If it is not decided that any door has been opened till the timer is counted up (that is, till the set time of the timer elapses from the unlocking action), the controller 31 executes the locking control (i.e., the output of the control signal to command the right door locking/unlocking actuator 42 or the left door locking/unlocking actuator 43 the locking action) to return the door of the vehicle to the locked state (at Step S22 and at Step S23). These are actions for restoring the locked state automatically from the viewpoint of prevention of crimes, because the door was not actually opened although the unlocking action had been executed, so that it is decided that the unlocking action was unnecessary.

If it is decided that the door has been opened till the timer is counted up, moreover, the location (the detail of which will be described hereinafter) of the mobile unit is executed (at Step S24), and it is decided (at Step S25) on the basis of the location result whether or not the mobile unit 50 has got in the vehicle from the outside (that is, whether or not the user carrying the mobile unit 50 has got in the vehicle). Here, the location of this case is repeatedly executed (at Step S25 and at Step S26) either till it is decided that the mobile unit 50 has got in the vehicle or till it is decided that the door once opened has been closed again. When it is decided that the vehicle door has been closed before it is decided that the mobile unit 50 has got in the vehicle, the routine advances from the viewpoint of the prevention of crimes to Step S23, at which the locked state is restored, and the a series of operations are ended (at Step S26 and at Step S23).

Here, in case the mobile unit 50 remains out of the vehicle at the operations of Step S24 and Step S25 so that the door is left open, the actions will not advance any farther (that is, the locations will be repeated forever). Therefore, the construction may be modified such that a series of operations are ended by the operation of the controller 31 (that is, the actions are repeated again in a next processing period from Step S11), for example, if the mobile unit 50 remains out of the vehicle and if a predetermined time elapses with the door being open.

When it is decided that the mobile unit 50 has got in the vehicle, moreover, it is estimated that the user carrying the mobile unit 50 has got in the vehicle. The controller 31 of the vehicle unit 30 changes the control mode into the engine start/stop control mode, and transmits the down-signal including the waking-up control signal again to the mobile unit 50. After this, the controller 31 transmits the down-signal including a mode change notifying signal for notifying a mode change, and execute the output change into a transmission output preferred for the engine start/stop control mode. In response to the down-signal including the aforementioned waking-up control signal, moreover, the mode is changed from the low power mode into the ordinary action mode, and the control circuit of the mobile unit 50 having received the down-signal including the mode change notifying signal also executes the output change of the transmission/reception circuit of the mobile unit 50 so that the transmission output may be preferred for the engine start/stop control mode (at Step S27 and at Step S28).

Here, the output change is an operation to change the transmission output merely from an initial value to a relatively small value (e.g., a value for realizing a relatively narrow communicative range (or a limited range) covering the inside and the neighborhood of the vehicle) preset for the engine start/stop control mode.

Before Step S27 (after Step S25), for example, a series of operations may be ended by executing the action to decide whether or not the door once opened is closed again for a set time by the operation of the controller 31 of the vehicle unit 30 but not by executing the actions at and after Step S27 unless the door is closed again for the set time. This is because the user generally opens and then closes the door when he or she gets in the vehicle, so that the engine start/stop control may be made by confirming the opening and closing actions.

Next, the control mode is changed, as described above, and an output adjustment (i.e., just a change in this case) is executed. Then, the down-signal including the aforementioned waking-up control signal is transmitted again from the vehicle unit 30 so that the control circuit of the mobile unit 50 is changed from the low powermode into the ordinary action mode. When the mobile unit 50 then receives the down-signal transmitted from the vehicle unit 30, the up-signal responding to the down-signal is transmitted from the mobile unit 50 (at Step S29) by the operations of the control circuit of the mobile unit 50. In this case, the control circuit of the mobile unit 50 automatically returns from the ordinary action mode to the low power mode when a predetermined time elapses after the up-signal was transmitted.

After this, the up-signal transmitted in the aforementioned manner is naturally received by the vehicle unit 30 without any fault such as an abnormal drop of the transmission output of themobileunit 50. The vehicle unit 30 having received the up-signal collates the ID contained in the up-signal and the collation ID held in advance in the vehicle unit 30, and decides (at Step S30) whether or not the IDs are identical.

If the IDs are identical, moreover, the signal to permit the.start/stop of the engine is outputted to the (not-shown) control unit of the engine control system by the control of the controller 31 thereby to establish the state in which the start/stop of the engine is permitted (at Step S31). If the IDs are not identical, on the contrary, the signal to inhibit the start/stop of the engine is outputted to the (not-shown) control unit of the engine control system by the control of the controller 31 thereby to keep the state in which the start/stop of the engine is inhibited (at Step S32).

When the state permitting the start/stop state of the engine comes in, the start/stop of the engine can be caused by the ordinary key operations (i.e., the operations of mechanical keys). In the state inhibiting the start/stop of the engine, on the contrary, the start/stop of the engine cannot be caused merely by the ordinary key operations.

From the viewpoint of the prevention of crimes, moreover, the construction should be made such that the permission of the start/stop of the engine is automatically released (or returned to the state of inhibiting the start/stop of the engine) by the control of the controller 31 either when the door is opened after the engine stop and is then closed again (that is, when it is estimated that the user gets out of the vehicle) or when it is decided by the location (the detail of which will be described hereinafter) of the mobile unit at Step S35 that the mobile unit 50 has got out of the vehicle.

Next, after the engine start/stop control mode, the decision of Step S11 in the next operation period advances to Step S33, at which it is decided whether or not the vehicle door has been opened. In case the vehicle door is left opened or closed after the engine start/stop control mode, a series of operations are ended without any action (that is, the engine start/stop control mode is kept).

If the vehicle door in the closed state is opened again (or if the vehicle door left open is closed) after the engine start/stop control mode, for example, the opening/closure of the door triggers the execution of the location (the detail of which will be described hereinafter) of the mobile unit 50 again (at Step S33 and at Step S34). When it is decided as a result of that location that the mobile unit 50 has got out of the vehicle (or has remained outside the vehicle) , moreover, the controller 31 of the vehicle unit 30 changes the control mode from the engine start/stop control mode into the door lock control mode, and transmits the down-signal including the waking-up control signal to the mobile unit 50. After this, the controller 31 transmits the down-signal including the mode change notifying signal to notify that mode change, and executes the output change so that the transmission output may be preferred for this door lock control mode (at Step S36 and at Step S37).

In response to the down-signal including the aforementioned waking-up control signal, moreover, the mobile unit 50 changes from the low power mode into the ordinary action mode, and the control circuit of the mobile unit 50 having received the down-signal including the aforementioned mode change notifying signal also executes the output change of the mobile unit 50 so that the transmission output may be preferred for this door lock control mode (at Step S36 and at Step S37 ) . Also, when it is not decided as a result of the location that the mobile unit 50 has go out of the vehicle (i.e., when it has decided that the mobile unit 50 remains in the vehicle), the location (the detail of which will be described hereinafter) (Step 34) is repeated.

Here, in case the mobile unit 50 remains in the vehicle at the operations of Step S34 and Step S35, the actions will not advance any farther (that is, the locations will be repeated forever). Therefore, the construction may be modified such that either a series of operations are ended by the operation of the controller 31 (that is, the actions are repeated again from Step S11) or the operations at and after Step S29 are executed again, for example, if a predetermined time elapses with the door being open with the mobile unit 50 remaining in the vehicle.

Here will be described the "Location of Mobile Unit" containing the point of the invention. At first, the mobile unit 50 of this embodiment is different in the following points from beginning one (or the mobile unit 1) of the related art.
(1) When the number of the transmission antennas of the vehicle unit 30 is n (n = 3, that is, the three antennas: the right transmission antenna 34; the left transmission antenna 35; and the back transmission antenna 36), the mobile unit 50 measures at first (i. e. , the first reception intensity measurement) the reception intensity of the down-signal from one transmission antenna (e.g., the right transmission antenna 34 for convenience). At this point of time, however, what is done is the measurement of the reception intensity but not the notification (to the vehicle unit 30) of the measurement result.
(2) Next, subsequent to or after lapse of a predetermined time from the first reception intensity measurement, the mobile unit 50 measures (i.e., the second reception intensity measurement) the reception intensity of a "dummy signal" (the definition of which will be described hereinafter) from a second transmission antenna (e.g.; the left transmission antenna 35 for convenience). At this point of time, however, what is done is also the measurement of the reception intensity but not the notification (to the vehicle unit 30) of the measurement result.
(3) Next, subsequent to or after lapse of a predetermined time from the second reception intensity measurement, the mobile unit 50 measures (i.e., the third reception intensity measurement) the reception intensity of a "dummy signal" (having the same definition as the aforementioned one) from a third transmission antenna (e.g., the back transmission antenna 36 for convenience). Here, the number of reception intensity measurements depends on the number n of the transmission antennas. For n = 3, for example, the measurements are done three times from the first to the third so that the third reception intensity measurement is the last one. However, a fourth reception intensity measurement is the last one for n = 4, or a fifth reception intensity measurement is the last one for n = 5. In short, the n-th reception intensity measurement is the last one.
   Here, it is assumed that the number of the transmission antennas belonging to the vehicle unit 30 is n, and that the reception intensities of the individual received signals are measured by sequentially receiving the signals transmitted from all (or the n-number) of transmission antennas. This is just one example. The reception intensities of the individual received signals may be measured by receiving the signals transmitted from at least two transmission antennas.
(4) When the mobile unit 50 completes the n-number of reception intensity measurements, it creates up-signals containing all the measurement results (i.e., the first to n-th reception intensity measurement results) till then, and transmits them all at once to the vehicle unit 30.

Thus, the mobile unit 50 in this embodiment is similar to the unit (i.e., the mobile unit 1) of the related art at the beginning in that it measures the individual reception intensities of the n-number of transmission antennas (i.e., the right transmission antenna 34 , the left transmission antenna 35 and the back transmission antenna 36) of the vehicle unit 30, but is different in that the measurement results are finally notified (to the vehicle unit 30) all at once.

In the related art (i.e., the mobile unit 1), the measurements of the reception intensity and the notifications of the measurement results paired and repeated by n-times (or in n-pairs) individually for the n-number of transmission antennas. If the time period necessary for each reception intensity measurement is designated by Ta and if the time period necessary for the notification of the measurement result is designated by Tb, a time period of {n x (Ta + Tb)} is caused in the example of the related art by a simple calculation, and this time period leads to the time lag of the problem. In this embodiment, however, at least the notifications of all the measurement results to the vehicle unit 30 are made all at once so that the necessary time period by the simple calculation is (n x Ta + Tb) at the longest. Therefore, the time lag can be reduced by the difference between {n x (Ta + Tb)) and (n x Ta + Tb). As a result, it is possible to provide a vehicular remote control system, which can achieve a better operation feel without any physical disorder.

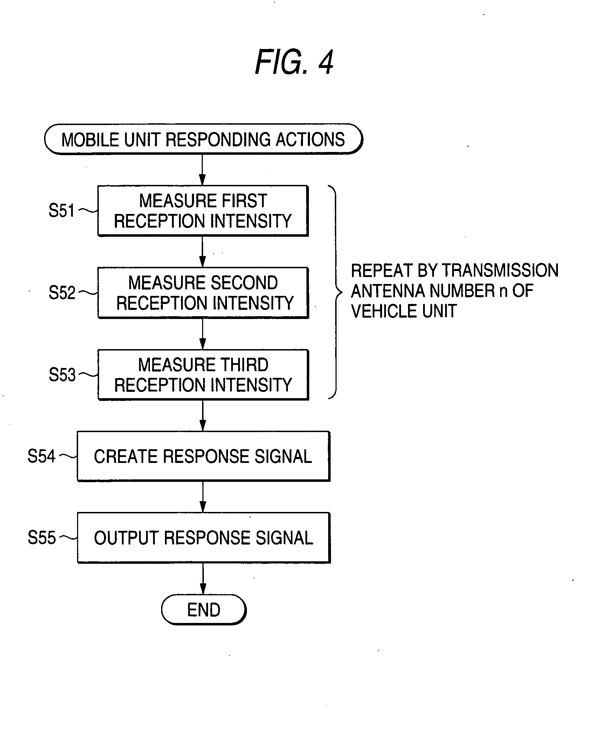

Fig. 3 is a diagram showing a subroutine flow of the "Location of Mobile Unit" common among Step S16, Step S24 and Step S34 in the flow chart of Fig. 2, and Fig. 4 is a diagram showing a flow chart of the mobile unit responding actions to be executed in the mobile unit 50 in response to that location.

At first in these Figures, the vehicle unit 30 transmits the down-signal using a first antenna (i.e., the right transmission antenna 34) (at Step S41), and the mobile unit 50 measures (i.e. , the first reception intensity measurement) the reception intensity of the down-signal (at Step S51). At this time, the down-signal transmitted from the right transmission antenna 34 of the vehicle unit 30 includes the predetermined control signal for waking up the mobile unit 50. In response to this control signal, the mobile unit 50 enters the ordinary action mode from the low power mode and then performs the first reception intensity measurement. The mobile unit 50 returns again to the low power unit when a predetermined time elapses after it executed the last final instruction. This "predetermined time" is at least a time period sufficient for all the reception intensity measurements (i.e., the first to third reception intensity measurements), so that the mobile unit 50 can perform the first to third reception intensity measurements continuously when once woken up.

When the vehicle unit 30 transmits the down-signal using the right transmission antenna 34, as described above, it subsequently transmits the dummy signal using the second antenna (i.e., the left transmission antenna 35) (at Step S42), and the mobile unit 50 measures (i. e. , the second reception intensity measurement) the reception intensity of that dummy signal (at Step S52).

Here, the dummy signal is one intended exclusively for measuring the reception intensity with the mobile unit 50 and is exemplified by either a signal composed of carrier waves or a signal containing an arbitrary piece of information not intended for a positive use. The period for transmitting the dummy signal can be made far shorter than that of the ordinary signal (e.g., the down-signal) transmitted from the vehicle unit 30. This reason is described in the following. It is sufficient that the dummy signal keeps the transmission level (accordingly the reception level, as viewed from the side of the mobile unit 50) stable only for the shortest period, for which the reception intensity can be measured at the mobile unit 50, so that the shortest period can be reduced to one half to some tenths of the transmission period (which is considerably long because the control signal or other information signal is contained) of the ordinary signal (e.g., the down-signal).

When the vehicle unit 30 transmits the dummy signal using the left transmission antenna 35, as described above, it subsequently transmits the dummy signal again using the third antenna (i.e. , the back transmission antenna 36) (at Step S43) , and the mobile unit 50 measures (i.e., the third reception intensity measurement) the reception intensity of that dummy signal (at Step S53).

The maximum number of measurements of the reception intensity at the mobile unit 50 depends on the number n of the transmission antennas of the vehicle unit 30, but the mobile unit 50 can be located on the basis of the reception intensity information from at least two transmission antennas. In the actual control, therefore, it is unnecessary to use all the n-number of transmission antennas of the vehicle unit 30. In the case of n = 3, it is sufficient to use only two of the transmission antennas. For convenience of the description, if all the n-number of antennas are used, that is, in case there are the three transmission antennas (i.e., the right transmission antenna 34, the left transmission antenna 35 and the back transmission antenna 36) as in this embodiment, the mobile unit 50 executes the first reception intensity measurement, the second reception intensity measurement and the third reception intensity measurement, as described above. When the final reception intensity measurement (i.e. , the third reception intensity measurement in the shown example) is completed, the mobile unit 50 creates a response signal (i.e. , the up-signal) to the mobile unit 50 (at Step S54).

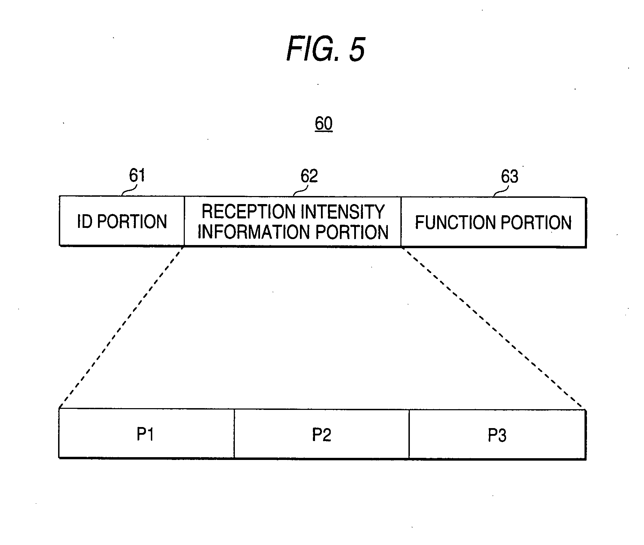

Fig. 5 is a diagram showing a format of the response signal. In Fig. 5, the format 60 includes: an ID portion 61 for storing the intrinsic identification information of the mobile unit 50; a reception intensity information portion 62 for storing the reception intensity information; and a function portion 63 for storing the remaining pieces of information. The reception intensity information storage portion 62 is stored with the aforementioned first reception intensity measurement value P1, second reception intensity measurement value P2 and third reception intensity measurement value P3.

When the mobile unit 50 creates the response signal stored with the first reception intensity measurement value P1, the second reception intensity measurement value P2 and the third reception intensity measurement value P3, as described above, and then transmits the response signal to the vehicle unit 30 (at Step S55). When the vehicle unit 30 receives the response signal from the mobile unit 50 (at Step S44), it extracts the first reception intensity measurement value P1, the second reception intensity measurement value P2 and the third reception intensity measurement value P3 from the reception intensity information storage portion 62 of the response signal, and sets them with predetermined values PR, PL and PB (at Step S45).

Here, the variable PR is set with the first reception intensity measurement value P1; the variable PL is set with the second reception intensity measurement value P2; and the variable PB is set with the third reception intensity measurement value P3. In short, PR = P1, PL = P2, and PB = P3. Therefore, the variable PR is set with the signal reception intensity (P1) from the right transmission antenna 34; the variable PL is set with the signal reception intensity (P2) from the left transmission antenna 35; and the variable PB is set with the signal reception intensity (P3) from the back transmission antenna 36. Therefore, the mobile unit 50 can be located on the basis of the magnitude relations among those variables PR, PL and PB.

For example, the preceding routine of Fig. 10 is appropriated to this location of the mobile unit 50. It is possible to decide (at Step S121) that the mobile unit 50 is located near the right door outside of' the vehicle, as shown in Fig. 10, if at least one of the variables PR, PL and PB is at or higher than a predetermined value (at Step S119) and if a condition 1 (PR > PL = PB) is satisfied (at Step S120). Alternatively, it is possible to decide (at Step S123) that the mobile unit 50 is located near the left door outside of the vehicle, if a condition 2 (PL > PR = PB) is satisfied (at Step S122). Alternatively, it is possible to decide (at Step S125) that the mobile unit 50 is located near the trunk outside of the door, if a condition 3 (PB > PR = PL) is satisfied (at Step S124). Alternatively, it is possible to decide (at Step S127) that the mobile unit 50 is located in the vehicle, if a condition (PR = PL > PB) is satisfied (at Step S126).

According to this embodiment, as has been described hereinbefore, it is possible to provide the vehicular remote control system 20, which can decide the location of the mobile unit 50 as in the related art, which can shorten the time period required for locating the mobile unit 50 thereby to reduce the time lag, and which has no physical disorder and can achieve an excellent operation feel.

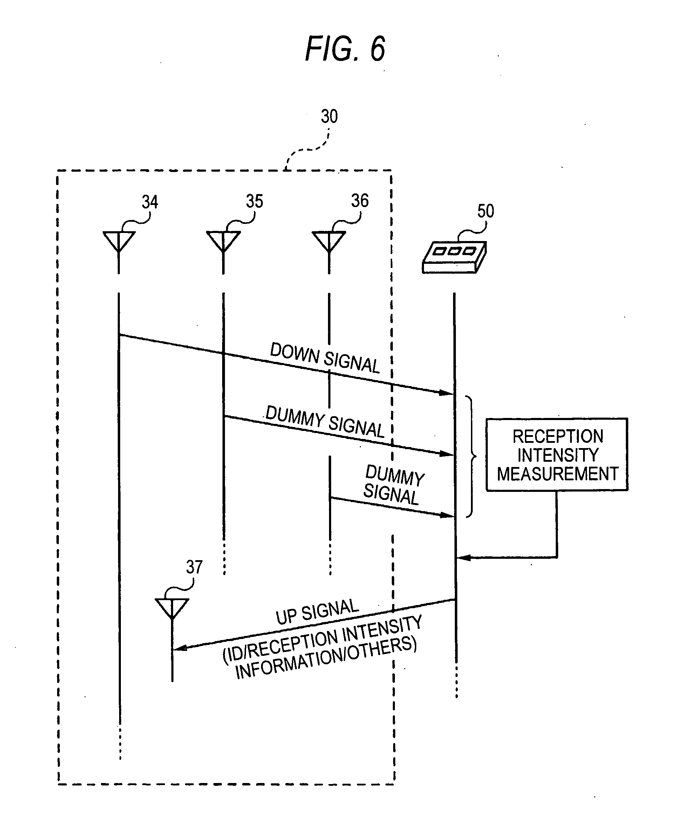

Fig. 6 is a diagram showing a conceptional time run of the location in this embodiment. In Fig. 6, the mobile unit 50 performs the first reception intensity measurement in response to the first down-signal reception from the vehicle unit 30, and then performs the second reception intensity measurement and the third reception intensity measurement during the reception period of the two dummy signals to be subsequently transmitted from the vehicle unit 30. After the mobile unit 50 completed the last reception intensity measurement (i.e., the third reception intensity measurement in the shown example), moreover, it transmits those reception intensity measurement results (P1, P2 and P3), as contained in the response signal, to the vehicle unit 30.

The first difference from the related art resides in that the measurement results are transmitted not for every reception intensity measurements but finally all at once to the vehicle unit 30. For example, if the time period necessary for each reception intensity measurement is designated by Ta and if the time period necessary for the notification of the measurement result is designated by Tb, the time period of {n x (Ta + Tb)} is caused in the example of the related art by the simple calculation. In this embodiment, however, at least the notifications of all the measurement results are made all at once so that the necessary time period by the simple calculation is (n x Ta + Tb) at the longest. Therefore, the time lag can be reduced by the difference between {n x (Ta + Tb)) and (n x Ta + Tb). As a result, it is possible to provide a vehicular remote control system 20, which can achieve a better operation feel without any physical disorder.

Moreover, the second difference from the example of the related art resides in that the reception intensity measurements (i.e., the second reception intensity measurement and the third reception intensity measurement) in the mobile unit 50 other than the first reception intensity measurement are performed for the dummy signal far shorter than that of the ordinary down-signal. Now, if the signal period of the ordinary down-signal is designated by Tc and if the signal period of the dummy signal is designated by Td, Tc > Td. If this difference (Tc - Td) is designated by α, at least the time period required for the reception intensity measurement in the mobile unit 50 can be shortened by {( n -1) x α) } ( i . e . , 2 x α for n = 3 ) . Therefore , the execution timings of Step S54 and Step S55 of Fig. 4 can be preceded by a time (2 x α). After all, the operations of Fig. 3 at and after Step S44 can be executed earlier by the time (2 x α) so that the time lag can be shortened.

Here, the embodiment of the invention should not be limited to that thus far described. The invention can naturally contain various modifications and developments within the scope of its technical concept, as will be exemplified in the following.

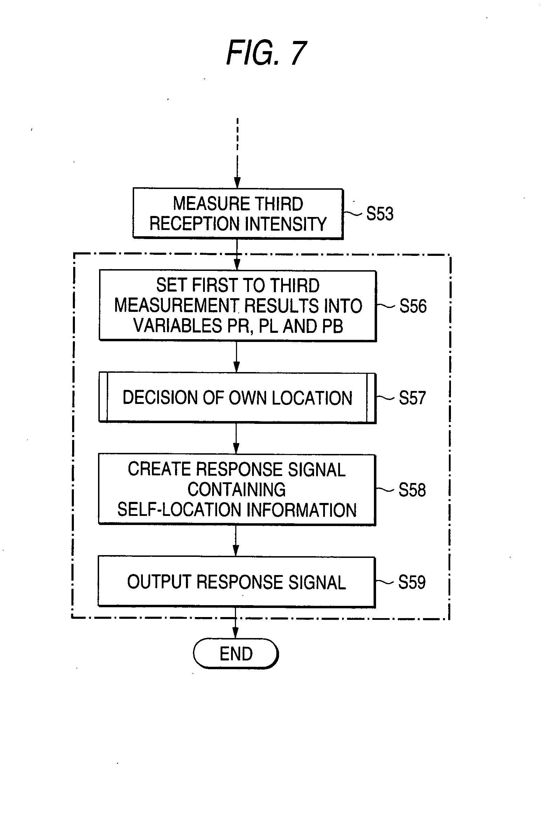

Fig. 7 is a diagram showing a modification of the embodiment of the invention and corresponds to the flow chart of Fig. 4. In this modification, the location of the mobile unit 50 is made not by the vehicle unit 30 but by the mobile unit 50 itself. Specifically, when the mobile unit 50 completes the last reception intensity measurement (i.e., the third reception intensity measurement in Fig. 7), it sets all the reception intensity measurement results individually set with the predetermined variables PR, PL and PB (at Step S56), and then executes the location of its own position (i.e., the position of the mobile unit 50 itself) (at Step 557). For example, the preceding routine of Fig. 10 can be appropriated to this location.

Specifically, it is possible to decide (at Step S121) that itself (i. e. , the mobile unit 50) is located near the right door outside of the vehicle, as shown in Fig. 10, if at least one of the variables PR, PL and PB is at or higher than a predetermined value (at Step S119) and if a condition 1 (PR > PL = PB) is satisfied (at Step S120). Alternatively, it is possible to decide (at Step S123) that itself (i.e. , the mobile unit 50) is located near the left door outside of the vehicle, if a condition 2 (PL > PR = PB) is satisfied (at Step S122). Alternatively, it is possible to decide (at Step S125) that itself (i.e., the mobile unit 50) is located near the trunk outside of the door, if a condition 3 (PB > PR = PL) is satisfied (at Step S124). Alternatively, it is possible to decide (at Step S127) that itself (i.e., the mobile unit 50) is located in the vehicle, if a condition (PR = PL > PB) is satisfied (at Step S126).

Thus, the mobile unit 50 having located itself then creates the response signal containing the decision result (or its own location) (at Step S58) and transmits the response signal to the vehicle unit 30 (at Step S59 ) thereby to end the operations. The vehicle unit 30 is enabled to execute the necessary operations to lock/unlock the door or to open the trunk by using the already established location information of the mobile unit 50.

In this modification, too, the response from the mobile unit 50 to the vehicle unit 30 is once (at Step S59) so that the time lag can be made shorter than that of the example of the related art, in which the responses are repeated at every measurements of the reception intensities. Here in the point of the processing ability, the vehicle unit 30 is naturally superior to the mobile unit 50. In order to shorten the time period necessary for the location, therefore, it is the best to perform the location at the vehicle unit 30, as performed in the foregoing embodiment.

According to the vehicular remote control system of the first aspect of the invention, the mobile unit sequentially receives signals transmitted from at least one of the transmission antennas to measure the reception intensities of the individual response signals, and then transmits the information on those reception intensities all at once to the vehicle unit. In short, in contrast to the related art, the invention contains the new matter of "the mobile unit sequentially receives signals transmitted from at least one of the transmission antennas to measure the reception intensities of the individual response signals, and then transmits the information on those reception intensities all at once to the mobile unit". Therefore, for example, if the time period necessary for each reception intensity measurement is designated by Ta and if the time period necessary for the notification of the measurement result (to the vehicle unit) is designated by Tb, the time period of {n x (Ta + Tb)} is caused in the related art by the simple calculation, and this time period leads to the problem of the time lag. However, the invention contains the above-specified new matter so that it takes the time period of (n x Ta + Tb) at the longest by the simple calculation, although the worst case (in which the signals transmitted from all the n-number of transmission antennas of the vehicle unit are sequentially received) is imagined.

In the invention, therefore, in contrast to the related art, the time lag can be reduced by the difference between {n x (Ta + Tb)) and {n x Ta + Tb). As a result, it is possible to provide the vehicular remote control system, which can achieve a better operation feel without any physical disorder.

According to the second aspect of the invention, on the other hand, the vehicular remote control system may comprise: a mobile unit carried by a driver and having a plurality of transmission antennas; and a vehicle unit mounted on a vehicle. The mobile unit sequentially receives signals transmitted from at least one of the transmission antennas to measure the reception intensities of the individual response signals, then locates the mobile unit on the basis of pieces of information of the reception intensities, and transmits the location result to the vehicle unit. The vehicle unit executes an arbitrary processing action according to the location result transmitted from the mobile unit.

In this invention, as in the vehicular remote control system of the first aspect of the invention, it is also possible to provide the vehicular remote control system, which can reduce time lag and achieve a better operation feel without any physical disorder.

In the vehicular remote control system of the first and second aspects of the invention, according to the vehicular remote control system of the third aspect of the invention, the arbitrary processing action may be an operation relating at least to a locking of a door, an unlocking of a door and an opening of a trunk, and performs: the locking/unlocking of an arbitrary door in case the mobile unit is located near the arbitrary door; the opening of a trunk in case the same is located near the trunk, or the warning with a horn, a buzzer vibration, an electric sound or another sound. In accordance with the present position of the mobile unit, it is possible to selectively perform the various operations the locking of the door, the unlocking of the door, the opening of the trunk, and the warning with the horn, the buzzer vibration, the electric sound or another sound.

In the vehicular remote control system of the first and second aspects of the invention, according to the vehicular remote control system of the fourth aspect of the invention, of the signals transmitted from all or not less than one of the transmission antennas, the signals other than that transmitted at first are exclusively dummy signals aiming mainly at measurements of the reception intensities at the mobile unit. The signal period of the dummy signal can be shortened to the minimum elongation, which aims mainly at the measurement of the reception intensity in the mobile unit, so that the time period Ta necessary for each reception intensity measurement can be made the shorter to reduce the time lag the more.

## Claims

1. A vehicular remote control system comprising: a mobile unit carried by a driver and having a plurality of transmission antennas; and a vehicle unit mounted on a vehicle,
wherein said mobile unit sequentially receives signals transmitted from at least one of the transmission antennas to measure the reception intensities of the individual response signals, and then transmits the information on those reception intensities all at once to said vehicle unit, and
wherein said vehicle unit locates said mobile unit on the basis of the reception intensity information transmitted from said mobile unit, and executes an arbitrary processing action according to the location of said mobile unit.

2. A vehicular remote control system comprising: a mobile unit carried by a driver and having a plurality of transmission antennas; and a vehicle unit mounted on a vehicle,
wherein said mobile unit sequentially receives signals transmitted from at least one of the transmission antennas to measure the reception intensities of the individual response signals, then locates said mobile unit on the basis of pieces of information of said reception intensities, and transmits the location result to said mobile unit, and
wherein said vehicle unit executes an arbitrary processing action according to the location result transmitted from said mobile unit.

3. A vehicular remote control system according to Claim 1 or 2,
wherein said arbitrary processing action is an operation relating at least to a locking of a door, an unlocking of a door and an opening of a trunk, and performs: the locking/unlocking of an arbitrary door in case said mobile unit is located near said arbitrary door; the opening of a trunk in case the same is located near said trunk, or the warning with a horn, a buzzer vibration, an electric sound or another sound.

4. A vehicular remote control system according to Claim 1 or 2,
wherein of the signals transmitted from all or not less than one of said transmission antennas, the signals other than that transmitted at first are exclusively dummy signals aiming mainly at measurements of the reception intensities at said mobile unit.
